# EUROPEAN PATENT APPLICATION

(11) **EP 0 895 322 A1**
(43) Date of publication of application: **03.02.1999**
(21) Application number: 97916644.4
(22) Date of filing: 11.04.1997
(51) Int. Cl.: H01S 3/036

(54) **GAS LASER**

(30) Priority: 15.04.1996 JP 92646/96
(71) Applicant: KOMATSU LTD., Minato-ku, Tokyo 107 (JP)
(72) Inventor: ABE, Tamotsu, Kenkyusho of Komatsu Ltd., Hiratsuka-shi, Kanagawa 254 (JP)
(74) Representative: Fiener, Josef
(86) International application number: JP9701255
(87) International publication number: WO9739502

(57) **Abstract**

Without changing the structure of a gas laser, the loss torque of a magnetic seal, the size of the driving motor of a gas circulating fan, the size of a gas laser as a whole and the power consumption are reduced. A control unit (1) supplies an ON/OFF signal (S1) to the valve (4) to close the valve (4), makes cooling water flow into the surrounding of a magnetic seal part (3b) and allows the temperature rise of the magnetic seal part (3b). Then the control unit (1) supplies a rotational speed instruction signal (S2) instructing an initial low rotational speed to a motor driving amplifier (2b) and monitors the driving torque (τm) of a fan driving motor (2a). When the driving torque reaches a predetermined lower limit driving torque value after a peak value, the control unit (1) increases the rotational speed gradually and issues an instruction of a steady rotational speed at the steady rotation to the motor driving amplifier (2b). The control unit (1) monitors a temperature signal (Tm) from a temperature sensor (9) and controls the opening and closing of the valve (4) so as to keep the temperature within a required range.

## Description

### TECHNICAL FIELD

This invention concerns a gas laser apparatus that realizes smaller motor volume and a motor drive system that can cope with loss torque (rotational resistance) in magnetic seals used in a shaft seal unit for a fan drive motor that circulates gas between electrodes in a laser chamber that generates a purple laser beam by the application of a high voltage (20 to 30 kV) between the electrodes under conditions wherein an inactive gas and a halogen gas are mixed.

### BACKGROUND ART

Conventionally, in a continuous oscillation or high-repetition pulse oscillation laser apparatus, a state is maintained inside a laser chamber wherewith laser oscillation is always possible, to which end it is necessary to circulate the laser medium gas that is being excited.

In a gas laser apparatus such as an excimer laser, on the other hand, rare gases and halogen gases are used as the laser medium gas, whereupon it is necessary to keep these halogen gases and other highly reactive gases from reacting with the material of which the laser chamber is made, and thus to prevent the degradation of the laser medium gas.

In particular, in a gas laser apparatus wherein a gas circulating fan is used for circulating the laser medium gas, what happens is that the oil or grease used in the motor that drives the fan reacts with the halogen gases in the laser medium gas to produce halides, thus reducing the halogen gas concentration, causing laser light to be absorbed by the halides produced, and causing the laser optical system to become contaminated. This results in the laser oscillation state being rendered unstable.

For this reason, in gas laser apparatuses wherein a highly reactive laser medium gas is used, such as in excimer lasers, for example, magnetic seals are used in linking the fan that is inside the laser chamber with the motor that drives the fan.

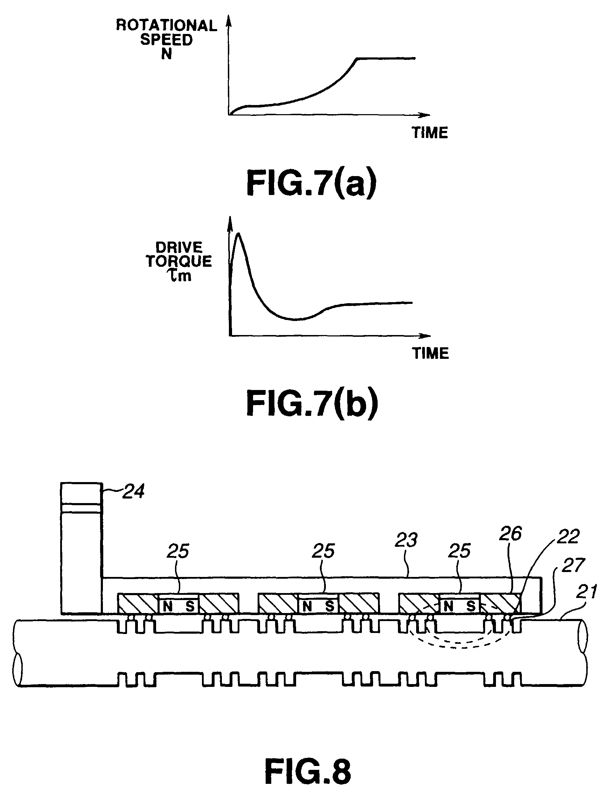

Fig. 8 is a diagram of one example of magnetic seals. The magnetic seal comprises a rotation shaft 21, magnetic fluid 22, housing 23, attachment flange 24, magnets 25, and pole pieces 26. Stages 27 similar to labyrinth seals are provided in the rotation shaft 21. The magnetic circuits are formed as closed circuits by a magnet 25, pole piece 26 (N pole), rotation shaft 21, pole piece 26 (S pole), and magnet 25, wherewith the magnetic flux is concentrated in the radial gap between each of the stages 27and pole pieces. The magnetic fluid 22 is interposed in these radial gaps, forming O rings, and thereby effecting gas seals. Each stage of these magnetic seals is capable of holding a pressure differential of about 0.2 atmosphere. Thus a high-pressure gas seal can be effected by using multiple stages, reducing leakage to nothing.

There are problems with the magnetic seals, however, namely an increase in loss torque due to the magnetic fluid, and increased apparatus size resulting from the multiplicity of stages used.

For this reason, a rotation introduction terminal is cited in Japanese Patent Application Laid-open No. 63-53937 wherewith the magnetic seals are preheated by heating means, the viscous resistance of the magnetic fluid in the magnetic seals is reduced, loss torque is reduced, and fan start-up time is shortened. This is based on the property of the magnetic fluid of exhibiting high viscosity at low temperatures and low viscosity at high temperatures.

In Japanese Patent Application Laid-open No. 63-27084, a laser device is described in which a differential pressure cell is provided at back stage of the magnetic seal, an inner pressure difference between the laser chamber and the differential pressure cell is made small compared to a difference between the inner pressure of the laser chamber and the atmospheric pressure, so that the number of stages of the magnetic seal is reduced, by which the magnetic seal is compact-sized and the number of the stages is reduced, thus the loss torque is also reduced.

In Japanese Patent Application Laid-open No. 60-157275, there is described a mechanism for effecting on/off control on the rotational speed of a gas circulating fan. More specifically, control is effected such that, after the gas circulating fan is started at a lower pressure than the laser medium gas pressure during laser oscillation, the laser medium gas pressure for laser oscillation is set, and the circulating fan is stopped whenever the laser medium gas pressure rises above a certain pressure.

With the technology disclosed in these two Japanese Patent Application Laid-open Nos. 63-53937 and 63-27084, however, magnetic seal loss torque is to be reduced by altering the structure of the magnetic seals by providing heating means or pressure-differential cells therein, wherefore the peripheral structure about the magnetic seals is made complex, and it becomes impossible to reduce the overall size of the gas laser apparatus or realize low power consumption.

### DISCLOSURE OF THE INVENTION

An object of the present invention is to eliminate the problems noted above, providing a gas laser apparatus wherewith the magnetic seal loss torque is lessened, and the size of the gas circulating fan drive motor is reduced, whereby the overall size of the gas laser apparatus can be made smaller and low power consumption can be realized, without altering the structure of the gas laser apparatus.

A first invention is a gas laser apparatus including a fan for circulating laser medium gas; a fan drive motor for driving the fan; and magnetic seals for preventing leakage of the laser medium gas from a drive shaft of the fan drive motor, characterized in that the apparatus comprises control means for controlling a rotational speed of the fan drive motor, based on a rotational speed pattern for a predetermined elapsed time for stabilizing the fan drive motor at a prescribed steady rotational speed, within a prescribed amount of time and within a prescribed drive torque.

A second invention is a gas laser apparatus including a fan for circulating laser medium gas; a fan drive motor for driving the fan; and magnetic seals for preventing leakage of the laser medium gas from a drive shaft of the fan drive motor, characterized in that the apparatus comprises: torque measurement means for measuring a drive torque of the fan drive motor; and control means for controlling a rotational speed of the fan drive motor, based on the drive torque measured by the torque measurement means, so as to stabilize the rotational speed at a steady prescribed speed within a prescribed amount of time and within a prescribed drive torque.

A third invention is the gas laser apparatus in the second invention, characterized in that the gas laser apparatus further comprises: a cooling valve for controlling opening and closing of inflow and outflow of cooling water that cools the magnetic seals; temperature measurement means for measuring a temperature of the magnetic seals; and valve control means for controlling opening and closing of the cooling valve, based on the temperature measured by the temperature measurement means, in order to maintain the temperature of the magnetic seals within a prescribed range.

### BRIEF DESCRIPTION OF THE DRAWINGS

Fig. 1 is a diagram depicting the configuration of a gas laser apparatus that is a first embodiment of the present invention;
Fig. 2 is a flowchart indicating drive control procedures for controlling a fan drive motor 2a by a controller 1;
Figs. 3(a) to 3(c) are timing charts for effecting rotational control for the fan drive motor 2a and temperature control for a magnetic seal unit 3b by the controller 1;
Fig. 4 is a diagram depicting the configuration of a gas laser apparatus that is a second embodiment of the present invention;
Figs. 5(a) to 5(d) are diagrams representing an example of a simple method for determining a rotational speed pattern wherewith the peak value until steady rotational speed is low;
Figs. 6(a) and 6(b) are diagrams representing a rotational speed pattern and a load-torque pattern produced on the basis of the rotational speed determined according to Fig. 5;
Figs. 7(a) and 7(b) are diagrams representing a produced rotational speed pattern and a drive torque pattern based on the produced rotational speed pattern; and
Fig. 8 is a diagram showing an example of a magnetic seal.

### BEST MODE FOR CARRYING OUT THE INVENTION

Embodiments of the present invention are now described, making reference to the drawings.

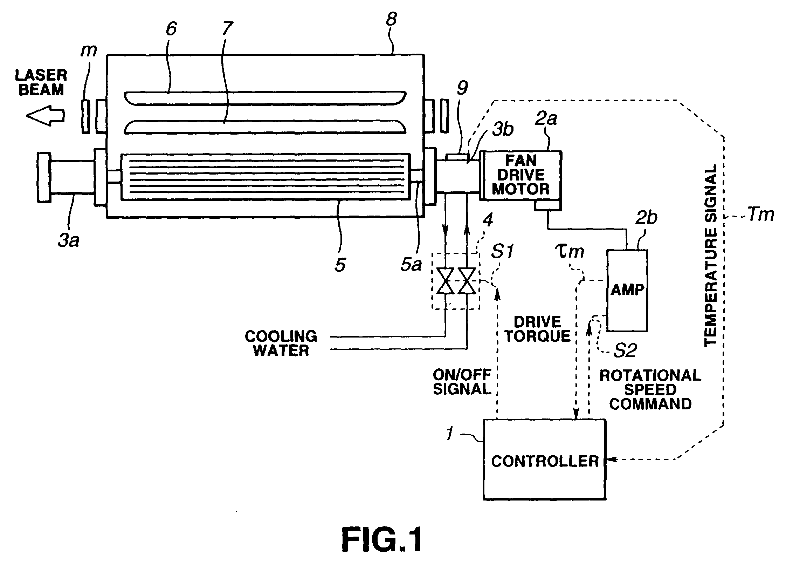

Fig. 1 is a diagram depicting the configuration of a gas laser apparatus that is a second embodiment of the present invention. In the gas laser apparatus diagrammed in Fig. 1, a laser chamber 8 is filled with a laser medium gas made up of a rare gas and a halogen gas, at prescribed pressure and compositional ratio, and a purple laser beam is output from a partially transparent mirror m by discharge excitation with discharge electrodes 6 and 7. A gas circulating fan 5 is comprised inside the laser chamber 8 for injecting the laser medium gas that is to be excited between the discharge electrodes 6 and 7. This gas circulating fan 5 is connected to a fan drive motor 2a that turns the gas circulating fan 5 via a drive shaft 5a. This fan drive motor 2a is in turn connected to a motor drive amp 2b. Between the fan drive motor 2a and the laser chamber 8, the laser medium gas is sealed inside the laser chamber 8 by a magnetic seal unit 3b so that it does not leak, and the other end of the drive shaft 5a is sealed by a magnetic seal unit 3a.

Cooling water flows about the periphery of the magnetic seal unit 3b to prevent the temperature of the magnetic seal unit 3b from rising. The inflow and outflow of this cooling water are controlled by the opening and closing of a valve 4. The magnetic seal unit 3b comprises a temperature sensor 9 for detecting the temperature of the magnetic seal unit 3b.

A controller 1 effects on/off control to open and close the valve 4 by an on/off signal S1, based on a temperature signal Tm detected by the temperature sensor 9. The controller 1, based on a drive torque signal τm from the motor drive amp 2b, outputs a rotational speed command signal S2 to the motor drive amp 2b, and thus controls the rotation of the fan drive motor 2a.

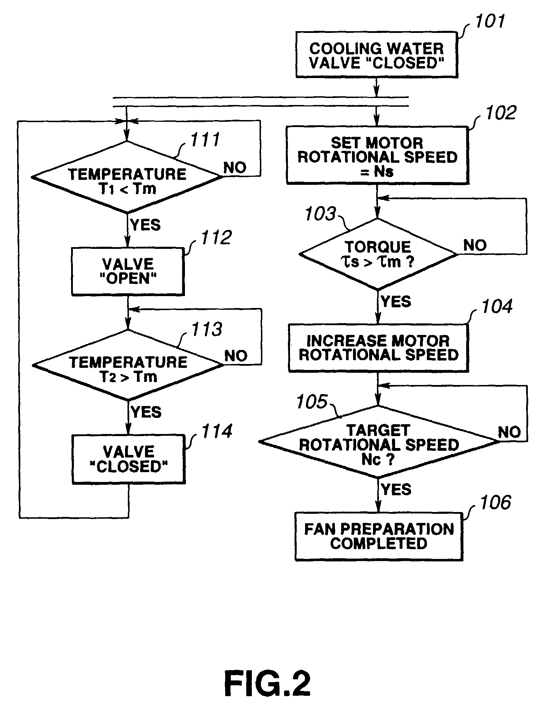

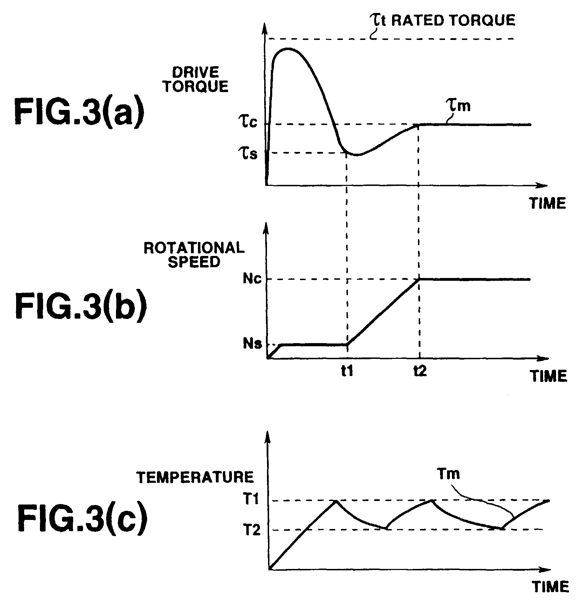

Next, with reference to Fig. 2 and 3, the drive control for the fan drive motor 2a by the controller 1 is described.

Fig. 2 is a flowchart indicating drive control procedures for controlling a fan drive motor 2a by a controller 1. First, in order to close the valve 4 when the fan drive motor 2a begins rotating, the controller 1 outputs an on/off signal S1 instructing the valve 4 to turn off (step 101), thus allowing the temperature of the magnetic seal unit 3b to rise.

The controller 1 next outputs a rotational speed command signal S2 for a predetermined initial rotational speed Ns (cf. Fig. 3(b)) to the motor drive amp 2b (step 102). As a result, the drive torque of the fan drive motor 2a, immediately after rotation starts, increases very rapidly under the influence of the initial loss torque (rotational resistance at low temperature) of the magnetic seal unit 3b. However, because the value of the initial rotational speed Ns as set is low, this will fall within the rated torque τt of the fan drive motor 2a. In other words, the initial rotational speed Ns is set so that it will fall within the rated torque τt of the fan drive motor 2a.

The controller 1 then monitors the drive torque signal τm from the monitor drive amp 2b, and effects control to maintain the initial rotational speed Ns until the drive torque τm becomes smaller than the drive torque τs predetermined as a constant (No in step 103).

When the drive torque signal τm becomes smaller than the predetermined drive torque τs (Yes in step 103), the controller 1 outputs a rotational speed command signal S2 to the motor drive amp 2b to gradually increase the rotational speed of the fan drive motor 2a (step 104). When the rotational speed indicated by the rotational speed command signal S2 reaches a prescribed rotational Speed Nc (Yes in step 105), the controller 1 concludes that laser medium gas circulation will thereafter be effected normally, whereupon a laser oscillation preparation-complete signal is output from either a display unit or notification unit not shown in the drawing.

The controller 1, meanwhile, in parallel operations, after outputting an on/off signal S1 instructing the valve 4 to turn off (close) in step 101, monitors the temperature signal Tm from the temperature sensor 9, determines whether or not a prescribed threshold temperature T1 has been exceeded (step 111), outputs an on/off signal S1 to the valve 4 instructing the valve 4 to turn on (open) (step 112), causes cooling water to flow in, and thus effects control to lower the temperature of the magnetic seal unit 3b. The controller 1 also continuously monitors the temperature signal Tm from the temperature sensor 9 to determine whether or not the temperature has fallen below a threshold temperature T2 (step 113). When the temperature falls below the threshold temperature T2, the controller 1 outputs an on/off signal S1 to the valve 4 directing it to turn off (close) (step 114), thereby stopping the inflow of cooling water, preventing the temperature of the magnetic seal unit 3b from declining, and allowing the temperature to rise due to the rotational friction of the magnetic fluid inside the magnetic seal unit 3b. The controller 1 moves to step 111 and repeats the temperature control described above, thereby maintaining the temperature of the magnetic seal unit 3b between the threshold temperature T1 and the threshold temperature T2.

Next, with reference to the timing charts given in Fig. 3, the rotation control for the fan drive motor 2a and the temperature control of the magnetic seal unit 3b by the controller 1 are described in terms of time sequences.

The charts in Fig. 3(a) and (b), respectively, are plots of the drive torque τm and change in rotational speed over time for the fan drive motor 2a. When a rotational speed command signal S2 for the initial rotational speed Ns is input from the controller 1 to the motor drive amp 2b, the fan drive motor 2a, through the motor drive amp 2b, immediately reaches the initial rotational speed Ns, and maintains that initial rotational speed Ns until time t1. The drive torque τm during the time period up to that time t1 increases very rapidly as rotation commences due to the rotational resistance of the magnetic fluid in the magnetic seal unit 3b, but the rotational resistance decreases due to the rise in temperature associated with the rotational resistance, whereupon the prescribed drive torque τs is attained at point t1. In the time period from this time t1 to the next time t2, the controller 1 causes the rotational speed to gradually rise from the rotational speed Ns in what is, here, a linear manner. In conjunction with this, the drive torque τm also gradually increases, and, when it reaches the prescribed rotational speed Nc, the rotational speed is maintained at this prescribed rotational speed Nc. The drive torque τm also, from this time t2 onward, is maintained at a constant torque τc.

The chart in Fig. 3(c) is a plot of temperature changes in the magnetic seal unit 3b. The controller 1, at the time rotation starts, sets the valve 4 in the off (open) position, whereupon the temperature of the magnetic seal unit 3b rises in conjunction with the rotation (at rotational speed Ns) of the fan drive motor 2a. Subsequently, when the temperature of the magnetic seal unit 3b reaches the prescribed threshold temperature T1, the valve 4 is turned on (open), cooling water flows into the periphery about the magnetic seal unit 3b, and the temperature of the magnetic seal unit 3b declines. When the temperature declines as far as the prescribed threshold temperature T2, the valve 4 is turned off (closed), the cooling water is stopped, and the temperature of the magnetic seal unit 3b rises. Such temperature control is conducted repeatedly, whereby the temperature of the magnetic seal unit 3b is maintained between the threshold temperature T1 and the threshold temperature T2.

Thus, in the first embodiment, the drive torque τm and temperature Tm are monitored, and both rotational speed control for the fan drive motor 2a and magnetic seal unit 3b temperature control are performed, independently and in parallel. Hence, compared to cases wherein the rotational speed of the fan drive motor is made constant after it is started up, the fan can be driven by a fan drive motor having an allowable load capacity of approximately one third. As a result, the size of the fan drive motor can be reduced, without in any way altering the structure of the magnetic seal unit 3b, making it possible to implement a gas laser apparatus the overall size of which is made smaller.

The control of the rise in the rotational speed from time t1 to time t2 in the first embodiment, as described above, is such, moreover, that the rotational speed is raised linearly, but it need not be so limited. This control may instead be performed so that, for example, the rotational speed is raised quadratically from Ns to Nc.

In the first embodiment, furthermore, the temperature sensor 9 is provided in the magnetic seal unit 3b, and the temperature in the magnetic seal unit 3b is controlled by opening and closing the valve 4 based on the temperature signal Tm from the temperature sensor 9. However, there would of course be no problem with performing rotational speed control with the cooling water left flowing in, maintaining the valve 4 in the on (open) state as rotation commences.

A second embodiment is next described. In the second embodiment, a rotational speed pattern relative to the passage of time is found such that the peak value of the fan drive motor torque is minimized until a constant rotational speed, such as the rotational speed Nc in the first embodiment, is reached. The fan drive motor is run on the basis of the rotational speed pattern so found.

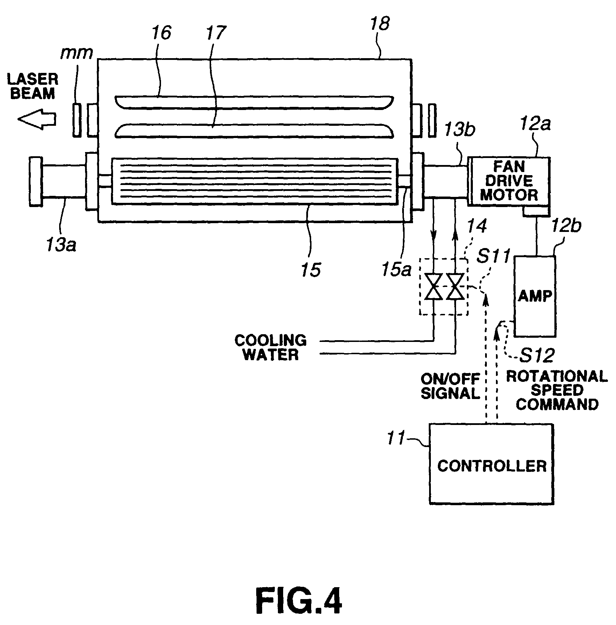

Fig. 4 is a diagram depicting the configuration of a gas laser apparatus that is the second embodiment of the present invention. In Fig. 4, this gas laser apparatus exhibits roughly the same configuration as the gas laser apparatus diagrammed in Fig. 1. There is no temperature sensor 9, however, and the controller does not effect control by monitoring the temperature signal Tm from the temperature sensor 9 or the drive torque τm from the motor drive amp.

More specifically, the gas laser apparatus based on this second embodiment is such that a laser chamber 18 is filled with a laser medium gas made up of rare gases and halogen gases, at a prescribed pressure and composition, and an ultraviolet laser beam is output from a partially transparent mirror mm by discharges excited with discharge electrodes 16 and 17. The interior of the laser chamber 18 is provided with a gas circulating fan 15 for introducing the laser medium gas to be excited between the discharge electrodes 16 and 17. This gas circulating fan 15 is connected to a fan drive motor 12a that turns the gas circulating 15 via a drive shaft 15a. The fan drive motor 12a, in turn, is connected to a motor drive amp 12b. A seal is made between the fan drive motor 12a and the laser chamber 18 by seal unit 13b so that the laser medium gas inside the laser chamber 18 does not leak. The other end of the drive shaft 15a is sealed with magnetic zeal unit 13a.

Cooling water flows about the periphery of the magnetic seal unit 13b to prevent the temperature of the magnetic seal unit 13b from rising. The in-flow and out-flow of this cooling water is controlled by opening and closing valve 14.

A controller 11 on/off-controls the opening and closing of the valve 14 by an on/off signal S11. The controller 11 also outputs a rotational speed command signal S12 to the motor drive amp 12b and controls the rotation of the fan drive motor 12a, based on a predetermined rotational speed pattern over time.

The predetermined rotational speed pattern here, as noted earlier, is a pattern wherewith is minimized the peak value of the drive torque until the rotational speed of the fan drive motor 12a reaches a constant rotational speed. The time interval until the fan drive motor 12a reaches a constant rotational speed is usually determined so that it matches the warm-up time (approximately 10 minutes) for the thyratron used as the switching device for generating discharges between the discharge electrodes 16 and 17. Accordingly, it is necessary to determine a rotational speed pattern wherewith the drive torque peak value is minimized and the desired constant rotational speed is reached during that determined time interval. Finding this rotational speed pattern is a kind of optimization problem, and it is very difficult to derive an exact solution therefor.

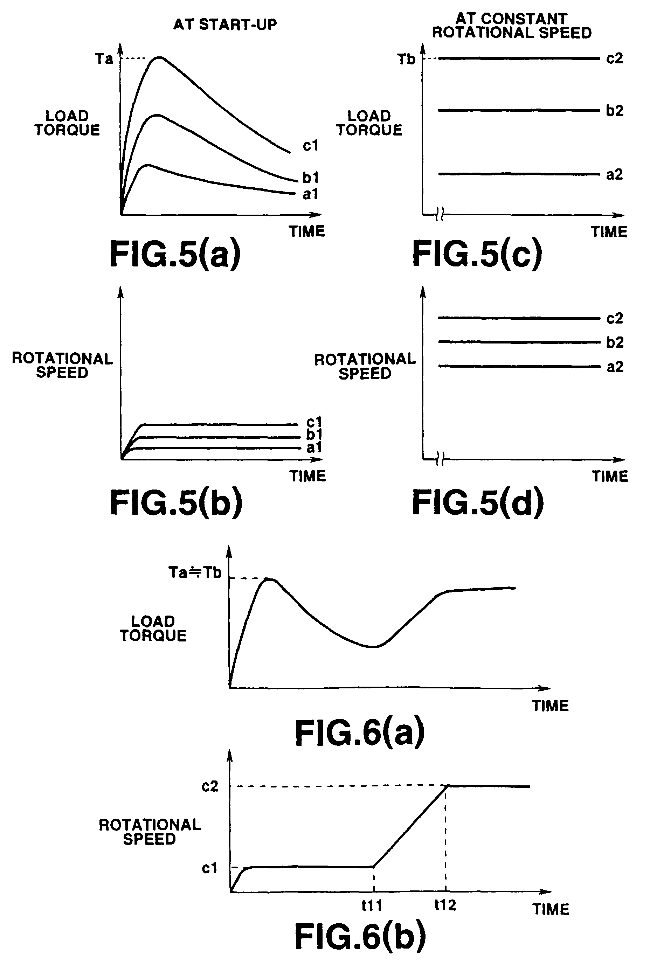

This being so, an example of a simple derivation of a rotational speed pattern wherewith the peak value is low until constant speed is reached is now explained, making reference to Fig. 5.

First, the changes in load torque sustained by the fan drive motor 12a from the magnetic seal unit 13b as time elapses, beginning from the time rotation commences (start-up time), as plotted in Fig. 5(a), are found in terms of the rotational speed parameters (a1 to c1) plotted in Fig. 5(b). Next, the changes in load torque sustained by the fan drive motor 12a from the magnetic seal unit 13b at constant rotational speed, as plotted in Fig. 5(c), are found in terms of the rotational speed parameters (a2 to c2) plotted in Fig. 5(d).

Rotational speeds are determined, respectively, at which the peak load torque value as diagrammed in Fig. 5(a) and the load torque value at constant rotational speed as diagrammed in Fig. 5(c) roughly match. When, for example, the value of the load torque value Tb for the rotational speed c1 diagrammed in Fig. 5(a) and the value of the load torque value Tb for the rotational speed c2 diagrammed in Fig. 5(c) roughly coincide, the rotational speed at start-up is set at c1 and the rotational speed at constant rotational speed is set at c2.

Subsequently, a rotational speed pattern such as that plotted in Fig. 6(b) is produced. In more specific terms, the period from time t11 to time t12 is determined as the period during which there is a transition from rotational speed c1 to rotational speed c2. In Fig. 6(b), the change in rotational speed during the transition from rotational speed c1 to rotational speed c2 is a linear change, but, as with the first embodiment, this may be some other rotational speed change. Time t11, here, is established as a time at which the peak value of the drive torque during start-up has been fully passed. It goes without saying, furthermore, that the time interval to time t12 is a time period that at least includes the required time intervals, such as that required for thyratron warm-up, as mentioned earlier. By producing the rotational speed pattern plotted in Fig. 6(b), it is possible to obtain the changes in the load torque over time plotted in Fig. 6(a), corresponding to that rotational speed pattern.

It is presupposed here, in determining the rotational speed at start-up and the rotational speed at constant rotational speed, as described in the foregoing, that the torque on the fan drive motor 12a falls within the rated torque therefor. It is thereby possible to use the fan drive motor 12a that is capable of handling the load torque at constant rotational speed as the fan drive motor for the gas laser apparatus. For this purpose, the fan drive motor need only have approximately one third of the allowable torque capacity of a conventional fan drive motor on which no rotational speed control is performed. Thus not only can the fan drive motor be made smaller, but the overall gas laser apparatus can be made smaller, too.

In addition, instead of employing this simple method of deriving rotational speed patterns, it is of course permissible to derive a rotational speed pattern by finding the optimal solution described above more rigorously.

The procedures for controlling the drive of the fan drive motor 12a by the controller 11 are now described. The controller 11 outputs the rotational speed pattern found, such as the rotational speed pattern plotted in Fig. 7(a), for example, as time passes, to the motor drive amp 12b, in the form of rotational speed command signals S12, whereupon the fan drive motor 12a is driven so as to follow this rotational speed pattern. As a result, the drive torque exhibits the change over time plotted in Fig. 7(a).

The controller 11, moreover, turns the valve 14 on (open) with an on/off signal S11, simultaneously with start-up, causing cooling water to flow into the periphery of the magnetic seal unit 13b, and thus preventing the temperature of the magnetic seal unit 13b from rising.

### INDUSTRIAL APPLICABILITY

As described above in detail, with the present invention, the rotational speed of the fan drive motor is controlled by the control means, particularly from start-up until constant speed is attained, whereupon the rotational speed of the fan drive motor is kept at a constant rotational speed within a prescribed time interval and within a prescribed drive torque [range]. Therefore, the fan drive motor can be made smaller, even without complexly modifying the magnetic seal peripheral structure, which is an advantage. It thus becomes possible to drive the fan with a fan drive motor having approximately one third the allowable load capacity of a conventional fan drive motor.

It also becomes possible to make the fan drive motor itself smaller, without complexly modifying the magnetic seal peripheral structure, so that the gas laser apparatus overall can be made smaller, thus providing an additional benefit.

## Claims

1. A gas laser apparatus including a fan for circulating laser medium gas; a fan drive motor for driving the fan; and magnetic seals for preventing leakage of the laser medium gas from a drive shaft of the fan drive motor, characterized in that the apparatus comprises:
control means for controlling a rotational speed of the fan drive motor, based on a rotational speed pattern for a predetermined elapsed time for stabilizing the fan drive motor at a prescribed steady rotational speed, within a prescribed amount of time and within a prescribed drive torque.

2. A gas laser apparatus including a fan for circulating laser medium gas; a fan drive motor for driving the fan; and magnetic seals for preventing leakage of the laser medium gas from a drive shaft of the fan drive motor, characterized in that the apparatus comprises:
torque measurement means for measuring a drive torque of the fan drive motor; and
control means for controlling a rotational speed of the fan drive motor, based on the drive torque measured by the torque measurement means, so as to stabilize the rotational speed at a steady prescribed speed within a prescribed amount of time and within a prescribed drive torque.

3. The gas laser apparatus according to Claim 2, characterized in that the gas laser apparatus further comprises:
a cooling valve for controlling opening and closing of inflow and outflow of cooling water that cools the magnetic seals;
temperature measurement means for measuring a temperature of the magnetic seals; and
valve control means for controlling opening and closing of the cooling valve, based on the temperature measured by the temperature measurement means, in order to maintain the temperature of the magnetic seals within a prescribed range.
